# EUROPEAN PATENT APPLICATION

(11) **EP 1 868 077 A2**
(43) Date of publication of application: **19.12.2007**
(21) Application number: 07252288.1
(22) Date of filing: 07.06.2007
(51) Int. Cl.: G06F 3/12

(54) **Automatic printer registration**

(30) Priority: 09.06.2006 US 450052
(71) Applicant: Ricoh Company, Ltd., Tokyo 143-8555 (JP)
(72) Inventor: Wu, Yuwen, Cupertino California 95014-5924 (US)
(74) Representative: Leeming, John Gerard

(57) **Abstract**

A technique is provided for automatically registering a printing device with a printer manager. An agent process associated with the printer manager receives notification data from the printing device that indicates that the printing device is available to process requests for printing electronic documents. In response, the agent process generates and transmits to the printing device a request for attribute data of the printing device. The agent process receives, from the printing device, attribute data that includes one or more attribute values for one or more values of the printing device. In response, the agent process registers, based upon the attribute data, the printing device with the printer manager.

## Description

The present invention relates to automatically registering printing devices.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

When a printing device is added to a network, various inefficiencies are manifested. First, a number of manual steps are required to register printing devices in a network. Second, a client machine on the network may not be able to communicate with the printing device, especially in the case where the printing device and client machine are running different operating systems. Thus, in order to connect to the printing device, the end user either must know the network address of the printing device or must search through a printer manager where all printing devices in a network are registered.

Third, information on a printer manager may be out-of-date. For example, a printer manager does not automatically update a printing device when the printing device is unavailable to process print jobs (e.g. offline, "out of paper", or "toner empty"). Thus, client applications attempting to send print jobs to unavailable printing devices will encounter errors that may not be immediately understood by end users.

Therefore, there is a need to automate the steps for registering printing devices, to provide identifying information to a client machine, and to maintain an accurate state of available printing devices in a network.

According to an embodiment of the invention, an approach is provided for automatically registering a printer device. The printing device may be any device that at least processes print data and generates printed versions of electronic documents reflected in the print data. According to the approach, notification data is received, e.g. at a printer manager, from the printing device over a communications network. The notification data indicates that the printing device is available to process print data. The printing device may send the notification data upon being added to the same network as the printer manager. Alternatively, the printer manager may probe the network searching for printing devices that are not yet registered. In response to receiving the notification data from the printing device, the printer manager generates and transmits a request for attribute data to the printing device. The attribute data may include, without limitation, the name of the printing device, the model of the printing device, the location of the printing device, and the network address of the printing device. Attribute data is received from the printing device and includes one or more attribute values for one or more attributes of the printing device. In response to receiving the attribute data from the printing device, the printing device is registered based upon the attribute data.

According to an embodiment, the printer manager sends identifying information identifying the printing device to client devices (e.g. upon a client request for available printing devices) to enable client devices to send print data to the printing device. If the printing device becomes unavailable, the printer manager may set the status of the printer to be "offline" or un-register the printing device.

The present invention is illustrated by way of example, and not by way of limitation, in the figures of the accompanying drawings and in which like reference numerals refer to similar elements and in which:
FIG. 1 is a flow diagram that illustrates steps for automatically registering a printing device, according to an embodiment of the invention;
FIG. 2 shows a functional block diagram of a system in which an embodiment of the present invention may be implemented;
FIG. 3 is a sequence diagram illustrating the communications between a printing device and a printer manager for automatically registering the printing device with the printer manager, according to an embodiment of the invention;
FIG. 4 is a flow diagram that illustrates how an agent process associated with a printer manager handles messages from printing devices in a network, according to an embodiment of the invention; and
FIG. 5 is a block diagram that illustrates a computer system upon which an embodiment of the invention may be implemented.

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

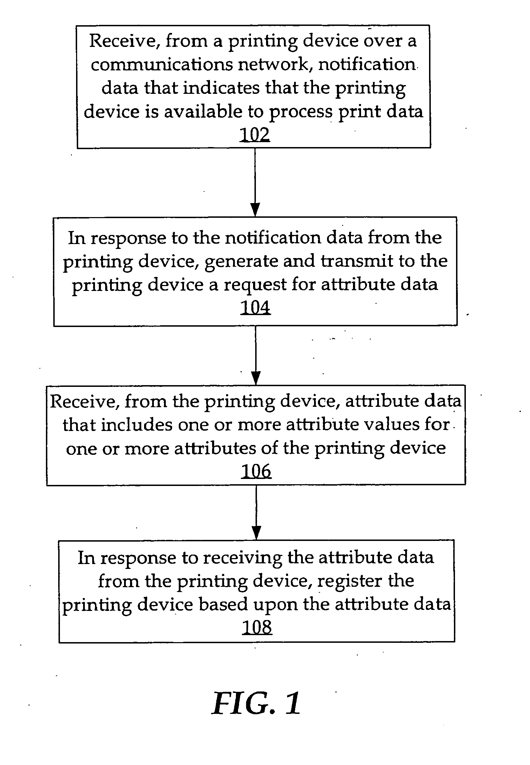

FIG. 1 is a flow diagram that illustrates steps for automatically registering a printing device, according to an embodiment of the invention. At step 102, notification data is received from a printing device over a communications network. According to an embodiment, an agent process executing on a printer manager receives the notification data. The notification data indicates that the printing device is available to process print data. At step 104, in response to the notification data from the printing device, the agent process, for example, generates and transmits to the printing device a request for attribute data. At step 106, attribute data is received from the printing device that includes one or more attribute values for one or more attributes of the printing device. At step 108, in response to receiving the attribute data from the printing device, the printing device is registered based upon the attribute data.

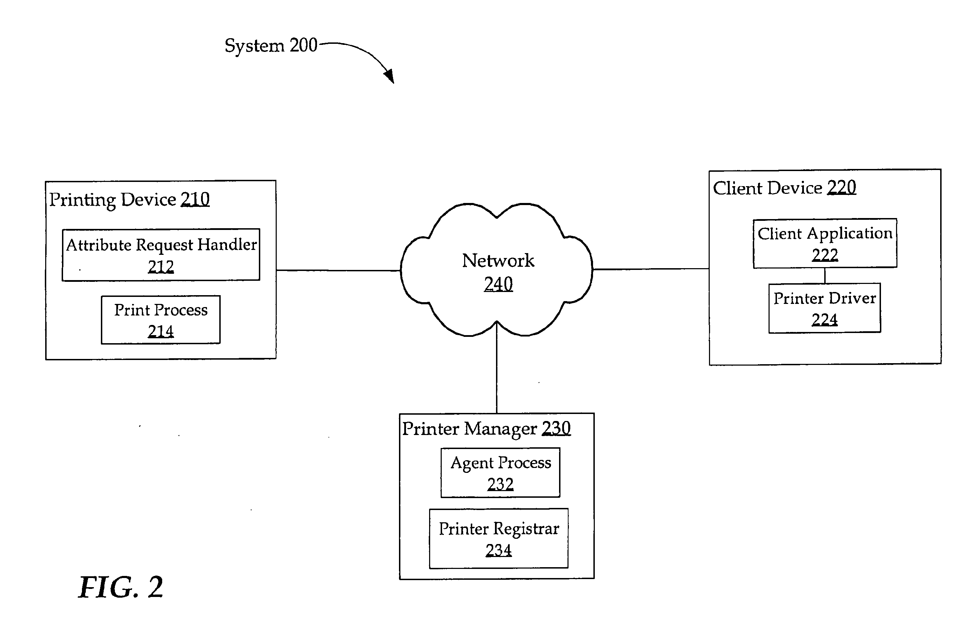

With reference to FIG. 2, there is shown a functional block diagram of a system 200 in which an embodiment of the present invention may be implemented. As shown, system 200 comprises a printing device 210, a client device 220, a printer manager 230, and a network 240. For the sake of simplicity, only one printing device 210 and one client device 220 are shown; however, the approach is applicable to any number of printing devices 210 and client devices 220.

Printing device 210 represents a printing device executing an attribute request handler 212 for processing requests for attribute data (e.g. metadata) of printing device 210. Printing device 210 may be implemented by any type of device that is capable of processing print data received from client device 220 and generate printed versions of electronic documents reflected in the print data. Printing device 210 may also comprise a print process 214 that receives and processes the print data in order to generate printed versions of electronic documents reflected in the print data.

References herein to the term "printing device" are not limited to a device that provides only printing services. "Printing device" may be any device that is capable of performing printing functions. Many printing devices today provide functionality in addition to printing, e.g. copying and scanning, and therefore references to "printing device" include such devices.

Client device 220 represents a client machine executing a client application 222 and a printer driver 224. Client application 222 may be any application that is capable of initiating requests for printing hard copies of electronic documents. Client application 222 may be, for example, a word processor that generates electronic documents or opens existing electronic documents for printing on printing device 210. Other examples of client application 222 include, without limitation, spreadsheet programs, graphics programs, financial applications, etc.

Printer driver 224 may be any process that is capable of transmitting requests for printing documents. Printer driver 224 may be logically part of client application 222 or may be a separate executing process, as shown. Printer driver 224 controls communications between client device 220 and printing device 210, either directly (via network 240) or indirectly through printer manager 230. Printer driver 224 is used as an intermediary to translate communications from other computer programs into a language that printing device 210 can understand. The use of a printing driver facilitates printer device independence. For example, when client application 222 is a word processing program, the word processing program does not (conventionally) directly instruct printing device 210 on how to print a particular page from an electronic document. Instead, client application 222 may instruct an operating system associated with client device 220 to send the page that is to be printed to printing device 210. The operating system forwards the page to printer driver 224. Printer driver 224 converts the page into a format that printing device 210 can understand.

Printer manager 230 is responsible for automatically registering printing devices (e.g. printing device 210). Printer manager 230 may also be responsible for forwarding requests between client device 220 and printing device 210, such as print requests and eventing information. Printer manager 230 may comprise an agent process 232 and a printer registrar 234. Agent process 232 executes on printer manager 230 and handles communications between itself and one or more printing devices. Such communications may include: 1) a message from a printing device indicating that the printing device is available to handle print requests (e.g. HELLO message), 2) a request for attribute data of the printing device, 3) a response indicating the values of attributes of the printing device, and 4) a message from a printing device indicating that the printing device is no longer available to handle print requests (e.g. BYE message). Agent process 232 may also be responsible for accessing a driver for a printing device from which attribute data was recently received.

Agent process 232 registers a printing device with printer registrar 234. Printer registrar 234 may be a database of organized information that associates attribute (i.e. registration) data with each printing device registered with printer manager 230. Attribute data includes at least one of the following attributes of a printing device: name, model, location, network address, capabilities, and the URL of a driver associated with the printing device. Printer registrar 234 may also maintain attribute data pertaining to printing devices that have been un-registered.

Agent process 232 and attribute request handler 212 may communicate using various protocols. Communications may be sent and received using Web Services protocols including Web Services Discovery, Web Services MetadataExchange, Web Services Security, and Web Services Eventing. These protocols provide a platform-independent way to, respectively, discover devices, exchange device and service metadata, enable secure messaging, and process eventing information so that devices from independent vendors may communicate with each other.

Network 240 may be implemented by any medium or mechanism that provides for the exchange of data between various nodes in the network. Examples of network 240 include, without limitation, a network such as a Local Area Network (LAN), Wide Area Network (WAN), Ethernet or the Internet, or one or more terrestrial, satellite, or wireless links. Network 240 may include a combination of networks such as those described. Network 240 may transmit data according to Transmission Control Protocol (TCP) and Internet Protocol (IP).

### AUTOMATIC REGISTRATION OF PRINTING DEVICES

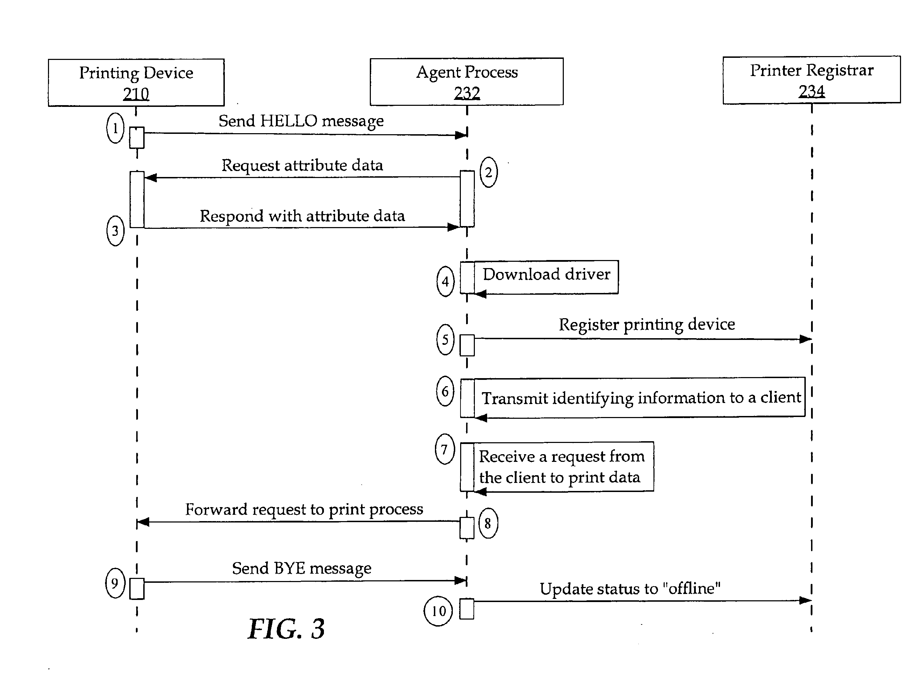

FIG. 3 is a sequence diagram illustrating example communications between printing device 210, agent process 232, and printer registrar 234 for automatically registering printing device 210 with printer manager 230, according to an embodiment of the invention. When referring to printing device 210 in FIG. 3 and the accompanying text as performing any function (e.g. sending, receiving), printing device 210 may include attribute request handler 212 performing the function. However, in order to avoid unnecessarily obscuring FIG. 3, printing device 210 is shown and described as performing the function.

At step 1, printing device 210 transmits notification data (e.g. a HELLO message) to agent process 232 indicating that printing device 210 is available to process print data. This notification data may be a multicast message. It is possible that the notification data is transmitted to agent process 232 in response to a discovery request (e.g. using WS-Discovery) sent by agent process 232 throughout network 240 to discover newly added devices, such as printing devices, in which case the notification data would be a unicast message.

In response to the notification data, agent process 232 generates and transmits to attribute request handler 212 a request (e.g. a unicast message) for attribute data of printing device 210 (step 2). The request may conform to any format or protocol depending upon a particular implementation. At step 3, attribute request handler 212 generates and transmits to agent process 232 a message indicating a reply message that includes one or more attribute values of one or more attributes of printing device 210.

The reply may include values of any type of attribute of printing device 210, depending upon a particular implementation. One of the attribute values in the message in step 3 may include location data that is used to access a driver for printing device 210. An example of location data is a Uniform Resource Locator (URL).

Therefore, using the location data, agent process 232 accesses (e.g. downloads) a driver for printing device 210 so that client application 222 may send requests to printing device 210 to print electronic documents (step 4). Client device 220 may send a request to printer manager 230 to retrieve the driver (e.g. when client device 220 queries printer manager 230 for available printing devices). Alternatively, agent process 232 may automatically provide the driver to client device 220. In another embodiment, agent process 232 forwards the location data (e.g. URL) to client device 220 to allow client device 220 to access the driver.

At step 5, agent process 232 registers printing device 210 with printer registrar 234. Printer registrar 234 may be a process that directs the storage of the attribute data received in step 3 instead of simply a database of registration data as described above. Therefore, printer registrar 234 may receive and respond to requests for storing attribute data, as well as requests for retrieving attribute data. The attribute data may be stored on a device separate from printer manager 230.

At step 6, agent process 232 may provide identifying information that identifies printing device 210 to client application 222. Alternatively, to avoid continually sending unsolicited messages to client devices, agent process 232 provides the identifying information to client application 222 only in response to agent process 232 receiving a request from client application 222 for available (i.e. registered) printing devices. Identifying information may include any or all of the attribute values sent by printing device 210 to agent process 232 in step 3, such as the network address of printing device 210. Identifying information may also include the driver for printing device 210. Once printing device 210 is registered with printer manager 230 and client application 222 has information identifying printing device 210, client application 222 may send printing device 210 requests, e.g. via printer driver 224, to print data. Client application 222 may send these requests directly to printing device 210. Alternatively, client application 222 may send these requests to agent process 232 (step 7), which forwards the requests to printing device 210 (step 8).

It is not necessary that agent process 232 performs each of steps 6, 7 and 8. Therefore, according to one embodiment, printer registrar 234 is configured to perform one or more of steps 6, 7, and 8.

If printing device 210 is unavailable to process print data for any reason, such as when printing device 210 is taken offline to make repairs then, in step 9, printing device 210 may be configured to send a message indicating that printing device 210 is no longer available to process print data (e.g. BYE message). However, in some cases, printing device 210 may go offline without being able to send any message to agent process 232. For example, the power supply to printing device 210 may have been disconnected from printing device 210. In such cases, therefore, only by periodically probing printing device 210 will agent process 232 determine that printing device 210 is unavailable to process print data.

If printing device 210 does not respond to one (or more) of the probes, or if printing device 210 sends, e.g. a BYE message to agent process 232, then in response, agent process 232 updates the status of printing device 210 to "offline" (or un-registers printing device 210), e.g. by notifying printer registrar 234 (step 10). Printer registrar 234 may delete all information associated with printing device 210, such as the attribute data of printing device 210. Agent process 232 or printer registrar 234 may notify client device 220 that printing device 210 is unavailable before or after any requests to process print data is received from client device 220. Agent process 232 or printer registrar 234 may make this notification to all client devices to which agent process 232 sent identifying information or just to those client devices that have queried printer manager 230 for registered printing devices.

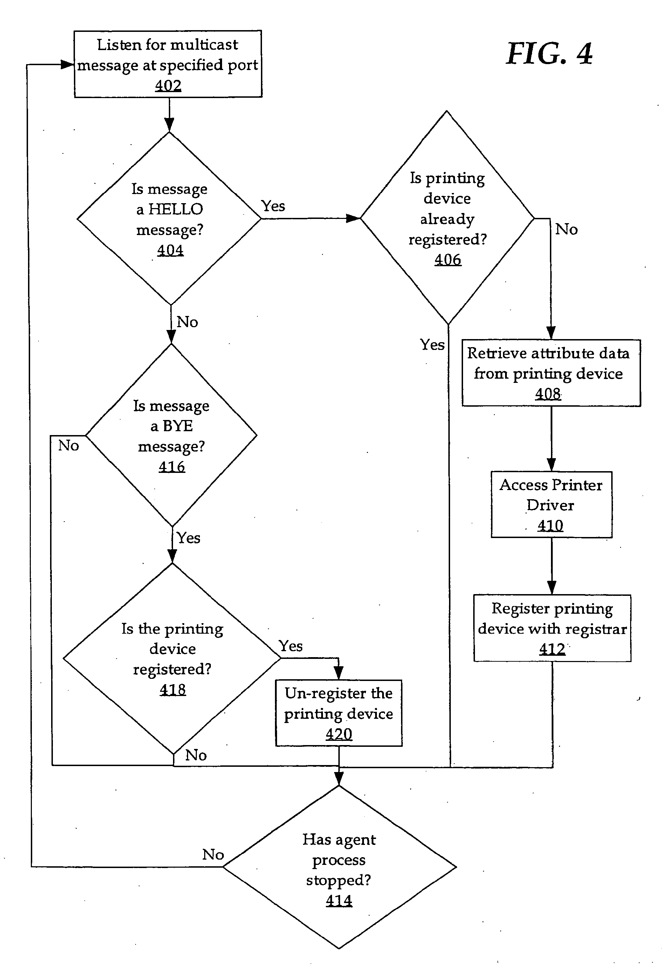

FIG. 4 is a flow diagram that illustrates agent process 232 processing messages received from printing devices in a network, according to an embodiment of the invention. At step 402, agent process 232 begins "listening", e.g. at a specified port, for multicast messages indicating that a printing device is available to process print data. Once agent process 232 receives a multicast message from a printing device, agent process 232 determines whether the message is a HELLO message (step 404). If the message is a HELLO message, then agent process 232, determines whether the printing device that sent the HELLO message is already registered (step 406). If not, then agent process 232 retrieves attribute data from the printing device (step 408), accesses a driver associated with the printing device (step 410), and registers the printing device with printer registrar 234 (step 412). If agent process 232 is still executing (step 414), then the process flow proceeds to step 402 where agent process 232 continues to "listen" for multicast messages.

If, at step 406, it is determined that the printing device has already been registered, then the process flow proceeds to step 416, where it is determined whether the printing device is "offline." If so, then the HELLO message indicates that the printing device is available once again to process print data and the status of the printing device is updated in step 418 (e.g. "ready" status). If the printing device is not "offline", then the process flow proceeds to step 414.

If, at step 404, it is determined that the message is not a HELLO message, then it is determined whether the message is a BYE message (step 420). If not, then the process flow proceeds to step 414 indicating that agent process 232 only performs the steps relating to registering and un-registering printing devices. Therefore, another process executing on printer manager 230 may handle print requests to print data if printer manager 230 acts as a router of such requests.

If, at step 420, the message is a BYE message, then it is determined whether the printing device that sent the BYE message is registered with printer manager 230 (step 422). If so, then agent process 232 updates the printing device to "offline" (step 424) by, e.g. notifying printer registrar 234, and the process flow proceeds to step 414. Alternatively, agent process 232 may un-register the printing device from printer registrar 234. If the printing device that sent the BYE message is not registered with printer manager 230, then process flow proceeds directly to step 414.

### IMPLEMENTATION MECHANISMS

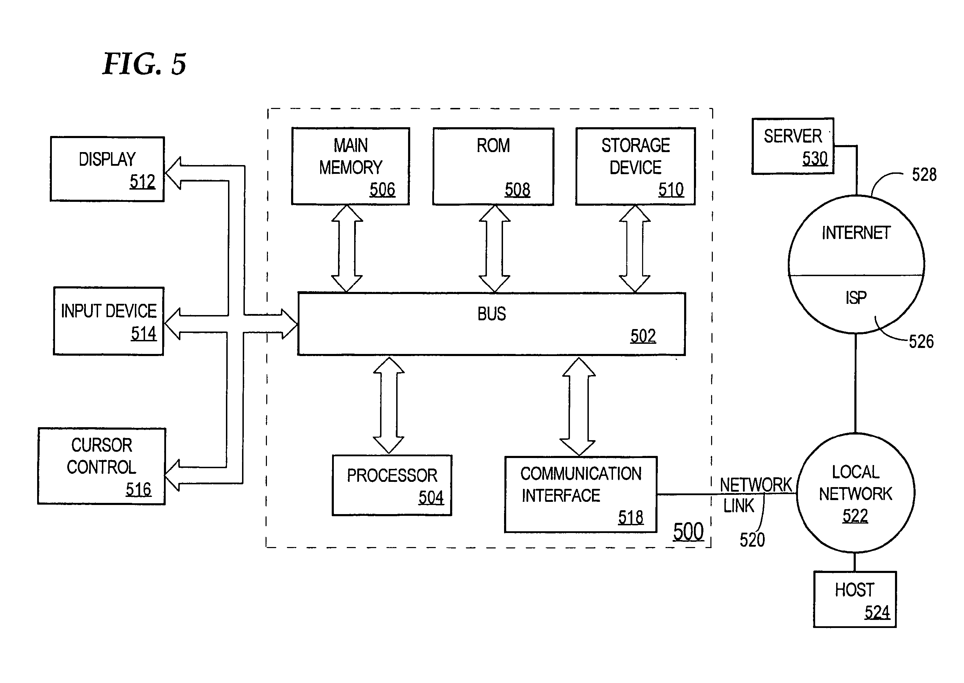

The approach described herein for automatically registering printing devices may be implemented on any type of computing platform or architecture. FIG. 5 is a block diagram that illustrates a computer system 500 upon which an embodiment of the invention may be implemented. Computer system 500 includes a bus 502 or other communication mechanism for communicating information, and a processor 504 coupled with bus 502 for processing information. Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

The invention is related to the use of computer system 500 for implementing the techniques described herein. According to one embodiment of the invention, those techniques are performed by computer system 500 in response to processor 504 executing one or more sequences of one or more instructions contained in main memory 506. Such instructions may be read into main memory 506 from another machine-readable medium, such as storage device 510. Execution of the sequences of instructions contained in main memory 506 causes processor 504 to perform the process steps described herein. In alternative embodiments, hard-wired circuitry may be used in place of or in combination with software instructions to implement the invention. Thus, embodiments of the invention are not limited to any specific combination of hardware circuitry and software.

The term "machine-readable medium" as used herein refers to any medium that participates in providing data that causes a machine to operation in a specific fashion. In an embodiment implemented using computer system 500, various machine-readable media are involved, for example, in providing instructions to processor 504 for execution. Such a medium may take many forms, including but not limited to, non-volatile media, volatile media, and transmission media. Non-volatile media includes, for example, optical or magnetic disks, such as storage device 510. Volatile media includes dynamic memory, such as main memory 506. Transmission media includes coaxial cables, copper wire and fiber optics, including the wires that comprise bus 502. Transmission media can also take the form of acoustic or light waves, such as those generated during radio-wave and infra-red data communications.

Common forms of machine-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, a carrier wave as described hereinafter, or any other medium from which a computer can read.

Various forms of machine-readable media may be involved in carrying one or more sequences of one or more instructions to processor 504 for execution. For example, the instructions may initially be carried on a magnetic disk of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are exemplary forms of carrier waves transporting the information.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518.

The received code may be executed by processor 504 as it is received, and/or stored in storage device 510, or other non-volatile storage for later execution. In this manner, computer system 500 may obtain application code in the form of a carrier wave.

In the foregoing specification, embodiments of the invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A machine-implemented method for automatically registering a printing device, comprising :
receiving, from the printing device over a communications network, notification
data that indicates that the printing device is available to process print data; in response to receiving the notification data from the printing device, generating
and transmitting to the printing device a request for attribute data; receiving, from the printing device, attribute data that includes one or more
attribute values for one or more attributes of the printing device; and in response to receiving the attribute data from the printing device, registering the
printing device based upon the attribute data.

2. The method of Claim 1, wherein the one or more attributes include one or more of a name of the printing device, a model of the printing device, a location of the printing device, and a network address of the printing device.

3. A method according to either claim 1 or claim 2, further comprising:
generating, based upon the attribute data, identifying information for the printing device;
transmitting the identifying information to a client process on a client device,
wherein the identifying information at least identifies the printing device; receiving a request from the client process to print data, wherein the request
includes the identifying information; and forwarding the request, based on the identifying information, to the printing device.

4. The method of Claim 3, wherein transmitting the identifying information to a client process on a client device is performed in response to receiving a query from the client device for available printing devices.

5. A method according to any one of the preceding claims, wherein:
the receiving notification data includes an agent process receiving the notification data;
the receiving attribute data includes the agent process receiving the attribute data; and
the registering the printing device includes the agent process registering the printing device.

6. The method of Claim 5, wherein communications between the agent process and the printing device are based on a plurality of Web Services protocols including at least Web Services Discovery, Web Services MetadataExchange, and Web Services Eventing.

7. A method according to any one of the preceding claims, further comprising generating and sending a discovery request throughout the network to discover new printing devices, wherein the printing device transmits the notification data in response to receiving the discovery request.

8. A method according to any one of the preceding claims, wherein:
the attribute data includes a location data that is used to access a driver associated with the printing device, and
the method further comprises retrieving the driver based upon the location data.

9. A method according to any one of the preceding claims, wherein:
the attribute data includes a location data that is used to access a driver associated with the printing device, and
the method further comprises sending the location data to a client device.

10. A method according to any one of the preceding claims, wherein the registering the printing device includes adding a reference to a printing device registration system, wherein the reference identifies the printing device.

11. The method of Claim 10, further comprising:
receiving an indication that the printing device is no longer available to process print data; and
in response to receiving the message, updating the status of the printing device in the printing device registration system to indicate that the printing device is offline.

12. A method according to any one of the preceding claims, wherein:
the notification data is received in a message that conforms to a multicast message format, and
the request for attribute data conforms to a unicast message format.

13. A computer program comprising program code means that, when executed on a computer system, instructs a computer system to carry out the steps according to any one of claims 1 to 12.

14. A computer readable storage medium having recorded thereon program code means that, when executed on a computer system, instructs a computer system to carry out the steps according to any one of claims 1 to 12.

15. A printer manager for automatically registering a printing device, the printer manager being configured to carry out the steps according to any one of claims 1 to 12.
